# EUROPEAN PATENT APPLICATION

(11) **EP 3 809 784 A1**
(43) Date of publication of application: **21.04.2021**
(21) Application number: 18922994.1
(22) Date of filing: 20.06.2018
(51) Int. Cl.: H04W 72/12

(54) **WIRELESS COMMUNICATION METHOD, TERMINAL DEVICE, AND NETWORK DEVICE**

(71) Applicant: GUANGDONG OPPO MOBILE TELECOMMUNICATIONS CORP., LTD., Dongguan Guangdong 523860 (CN)
(72) Inventor: TANG, Hai, Dongguan, Guangdong 523860 (CN)
(74) Representative: Penza, Giancarlo
(86) International application number: PCT/CN2018/092035
(87) International publication number: WO 2019/241936

(57) **Abstract**

The embodiments of the present application provide a wireless method and device, which can reasonably implement RLM using an unlicensed frequency band. The method comprises: a first network device performs a first listen before talk (LBT) operation on an unlicensed frequency band to transmit a reference signal; and if the first LBT operation fails, the first network device transmits indication information, the indication information being used for indicating that the first network device does not send the reference signal by using the unlicensed frequency band.

## Description

### Technical Field

The present application relates to the field of communication, and more particularly to a wireless communication method, a terminal device, and a network device.

### Background

In a Licensed Assisted Access (LAA) technology based on Long Term Evolution (LTE), since a Primary Cell (PCell) is on the licensed frequency band, UE may perform Radio Link Monitoring (RLM) on the licensed frequency band.

When the RLM is performed, a base station may send a reference signal on the licensed frequency band, and a terminal device may detect the reference signal and determine a channel quality based on the detected reference signal.

In a future communication system, such as a New Radio (NR) communication system, both a licensed frequency band and an unlicensed frequency band can be supported, and RLM needs to be performed on the unlicensed frequency band. How to perform the RLM on the unlicensed frequency band is an urgent issue to be solved.

### Summary

Embodiments of the present application provide a wireless method and a device, which can reasonably realize performing an RLM on an unlicensed frequency band.

In a first aspect, a wireless communication method is provided. The wireless communication method includes: a first network device performs a first Listen Before Talk (LBT) operation on an unlicensed frequency band, to send a reference signal; when the first LBT operation fails, the first network device sends indication information, wherein the indication information is used for indicating that the first network device does not send the reference signal through the unlicensed frequency band.

Therefore, in an embodiment of the present application, when the reference signal is not sent due to the failure of the LBT operation on the unlicensed frequency band, the network device may send the indication information, which can avoid an improper in-sync or out-of-sync operation.

Combined with the first aspect, in a possible implementation of the first aspect, sending, by the first network device, the indication information includes: the first network device performs a second LBT operation on the unlicensed frequency band; when the second LBT operation succeeds, a second network device sends the indication information to a terminal device through the unlicensed frequency band.

Combined with the first aspect or any of the above possible implementations, in another possible implementation of the first aspect, sending, by the first network device, the indication information includes: the first network device sends the indication information to a terminal device through a licensed frequency band.

Combined with the first aspect or any of the above possible implementations, in another possible implementation of the first aspect, sending, by the first network device, the indication information includes: the first network device sends the indication information to a second network device, where the indication information is used for the second network device to indicate to a terminal device through a licensed frequency band that the first network device does not send the reference signal through the unlicensed frequency band.

Combined with the first aspect or any of the above possible implementations, in another possible implementation of the first aspect, the first network device and the second network device adopt different Radio Access Technologies (RATs); and the indication information is information encoded with Abstract Syntax Notation One (ASN. 1) by the first network device.

Combined with the first aspect or any of the above possible implementations, in another possible implementation of the first aspect, the method further includes: the first network device sends to the second network device at least one piece of the following information: timing information of the reference signal at a first network device side; a time-frequency resource position for sending the reference signal; a time window for sending the reference signal; a period for sending the reference signal; and a type of the reference signal.

Combined with the first aspect or any of the above possible implementations, in another possible implementation of the first aspect, the method further includes: the first network device sends statistical information to a second network device, wherein the statistical information is used for indicating a number of times the reference signal is not successfully sent on the unlicensed frequency band.

Combined with the first aspect or any of the above possible implementations, in another possible implementation of the first aspect, the method further includes: the first network device receives a notification message sent by the second network device, wherein the notification message is used for notifying that a network device serving the terminal device is modified from the first network device to another network device, or for notifying that a Primary Cell (PCell) or Primary Secondary Cell (PSCell) of the first network device is modified.

Combined with the first aspect or any of the above possible implementations, in another possible implementation of the first aspect, the first network device is a Secondary Node (SN), and the second network device is a Master Node (MN).

Combined with the first aspect or any of the above possible implementations, in another possible implementation of the first aspect, performing, by the first network device, the first Listen Before Talk (LBT) operation on the unlicensed frequency band includes: the first network device performs the first LBT operation on multiple frequency points of the unlicensed frequency band; and failure of the first LBT operation means that no available resource is monitored on the multiple frequency points.

Combined with the first aspect or any of the above possible implementations, in another possible implementation of the first aspect, performing, by the first network device, the first Listen Before Talk (LBT) operation on the unlicensed frequency band includes: the first network device performs the first LBT operation on the unlicensed frequency band within a time window; wherein failure of the first LBT operation means that no available resource is monitored within the time window.

Combined with the first aspect or any of the above possible implementations, in another possible implementation of the first aspect, the indication information is carried in Radio Resource Control (RRC) signaling, physical layer signaling, or Media Access Control (MAC) layer signaling.

Combined with the first aspect or any of the above possible implementations, in another possible implementation of the first aspect, the method is applied in a StandAlone (SA) network scenario.

Combined with the first aspect or any of the above possible implementations, in another possible implementation of the first aspect, the method is applied in a Non-StandAlone (SA) network scenario or a Dual Connectivity (DC) network scenario.

In a second aspect, a wireless communication method is provided. The wireless communication method includes: a second network device receives first indication information sent by a first network device, wherein the first indication information is used for indicating that the first network device does not send a reference signal through an unlicensed frequency band; and the second network device sends second indication information to a terminal device through a licensed frequency band, wherein the second indication information is used for indicating that the first network device does not send the reference signal through the unlicensed frequency band.

Therefore, in the embodiment of the present application, the second network device receives first indication information sent by the first network device, wherein the first indication information is used for indicating that the first network device does not send the reference signal through the unlicensed frequency band. The second network device sends second indication information to the terminal device through the licensed frequency band, wherein the second indication information is used for indicating that the first network device does not send the reference signal through the unlicensed frequency band, so that the terminal device can avoid an improper in-sync or out-of-sync operation. And the terminal device sends the second indication information through the licensed frequency band, so that sending of the second indication information can be guaranteed, or the second indication information can be sent on time.

Combined with the second aspect, in a possible implementation of the second aspect, the first network device and the second network device adopt different Radio Access Technologies (RATs); and the second indication information includes information encoded with Abstract Syntax Notation One (ASN.1) by the first network device in the first indication information; and the second indication information includes the first indication information.

Combined with the second aspect or any of the above possible implementations, in another possible implementation of the second aspect, the method further includes: the second network device receives at least one piece of the following information sent by the first network device: timing information of the reference signal at a first network device side; a time-frequency resource position for sending the reference signal; a period for sending the reference signal; a time window for sending the reference signal; and a type of the reference signal; and sending, by the second network device, the second indication information to the terminal device through the licensed frequency band includes: the second network device sends, based on the at least one piece of the information, the second indication information to the terminal device through the licensed frequency band.

Combined with the second aspect or any of the above possible implementations, in another possible implementation of the second aspect, the method further includes: the second network device determines a number of times the reference signal is not successfully sent by the first network device through the unlicensed frequency band; based on statistical information, the second network device modifies a network device serving the terminal device from the first network device to another network device, or modifies a Primary Cell (PCell) or Primary Secondary Cell (PSCell) of the first network device.

Combined with the second aspect or any of the above possible implementations, in another possible implementation of the second aspect, determining, by the second network device, the number of times the reference signal is not successfully sent by the first network device through the unlicensed frequency band includes: the second network device receives statistical information sent by the first network device, wherein the statistical information is used for indicating the number of times the reference signal is not successfully sent by the first network device through the unlicensed frequency band; and the second network device determines, based on the statistical information, the number of times the reference signal is not successfully sent by the first network device through the unlicensed frequency band.

Combined with the second aspect or any of the above possible implementations, in another possible implementation of the second aspect, obtaining the number of times the reference signal is not successfully sent by the first network device through the unlicensed frequency band includes: the second network device determines the number of times the reference signal is not successfully sent by the first network device through the unlicensed frequency band according to a number of times the first network device sends the first indication information to the second network device.

Combined with the second aspect or any of the above possible implementations, in another possible implementation of the second aspect, the first network device is a Secondary Node (SN), and the second network device is a Master Node (MN).

Combined with the second aspect or any of the above possible implementations, in another possible implementation of the second aspect, the method is applied in a Non-StandAlone (SA) network scenario or a Dual Connectivity (DC) network scenario.

In a third aspect, a wireless communication method is provided. The wireless communication method includes: a second network device receives statistical information sent by a first network device, wherein the statistical information is used for indicating a number of times the reference signal is not successfully sent by the first network device through an unlicensed frequency band; and based on the statistical times, a network device serving a terminal device is modified from the first network device to another network device, or a Primary Cell (PCell) or Primary Secondary Cell (PSCell) of the first network device is modified.

Therefore, in the embodiment of the present application, the second network device receives statistical information sent by the first network device, wherein the statistical information is used for indicating the number of times the reference signal is not successfully sent by the first network device through the unlicensed frequency band, so that based on the statistical times, the network device serving the terminal device may be modified from the first network device to another network device, or the PCell or the PSCell of the first network device may be modified, thus avoiding a problem of a poor communication system caused by using an improper network device or PCell or PSCell serving the terminal device.

Combined with the third aspect, in another possible implementation of the third aspect, the method is applied in a Non-StandAlone (SA) network scenario or a Dual Connectivity (DC) network scenario.

In a fourth aspect, a wireless communication method is provided. The wireless communication method includes: a terminal device receives indication information, wherein the indication information is used for indicating that a first network device does not send a reference signal on an unlicensed frequency band; and the terminal device performs a Radio Link Monitoring (RLM) operation based on the indication information.

Therefore, in the embodiment of the present application, the terminal device receives the indication information that the network device does not sent the reference signal on the unlicensed frequency band due to the failure of the LBT operation, and may perform the RLM based on the indication information, thus avoiding an improper in-sync or out-of-sync operation.

Combined with the fourth aspect, in a possible implementation of the fourth aspect, performing, by the terminal device, the RLM operation based on the indication information includes: the terminal device adjusts, based on the indication information, an out-of-sync counter and/or an in-sync counter corresponding to the RLM operation.

Combined with the fourth aspect or any of the above possible implementations, in another possible implementation of the fourth aspect, receiving, by the terminal device, the indication information includes: the terminal device receives, through an unlicensed frequency band, the indication information sent by the first network device; or, the terminal receives, through a licensed frequency band, the indication information sent by a second network device.

Combined with the fourth aspect or any of the above possible implementations, in another possible implementation of the fourth aspect, the first network device is a Secondary Node (SN), and the second network device is a Master Node (MN).

In a fifth aspect, a wireless communication method is provided. The wireless communication method includes: a network device determines a target frequency point or cell from multiple frequency points or cells; and a reference signal or system information is sent in the target frequency point or cell.

Therefore, in the embodiment of the present application, the network device determines the frequency point from multiple frequency points and sends the reference signal on the determined frequency point, so that the terminal device performs the RLM operation, thereby avoiding a problem that the RLM cannot be performed since the reference signal cannot be sent caused by no resource monitored at a specific frequency point. Or, the network device sends the system information on the determined frequency point, which can avoid a problem that subsequent communication cannot be performed since the terminal device cannot obtain the system information.

Combined with the fifth aspect, in a possible implementation of the fifth aspect, the multiple frequency points or cells belong to an unlicensed frequency band.

Combined with the fifth aspect or any of the above possible implementations, in another possible implementation of the fifth aspect, determining, by the network device, the target frequency point or cell from the multiple frequency points or cells includes: the network device performs sequentially a Listen Before Talk (LBT) operation on the multiple frequency points; and takes a frequency point with a successful LBT operation as the target frequency point.

Combined with the fifth aspect or any of the above possible implementations, in another possible implementation of the fifth aspect, the method further includes: the network device sends a notification message to a terminal device, wherein the notification message is used for indicating the target frequency point or cell for receiving the reference signal or system information.

In a sixth aspect, a wireless communication method is provided. The wireless communication method includes: a terminal device determines, from multiple frequency points, a frequency point on which a Radio Link Monitoring (RLM) operation is performed; and the terminal device performs the RLM operation on the determined frequency point, wherein RLM operations on the multiple frequency points adopt a same out-of-sync counter and/or a same in-sync counter, or, the terminal device receives system information on the determined frequency point.

Therefore, in the embodiment of the present application, the terminal device determines the frequency point, on which the RLM operation is performed, from multiple frequency points, and the terminal device performs the RLM operation on the determined frequency point, wherein the RLM operations on the multiple frequency points adopt the same out-of-sync counter and/or the same in-sync counter. Thus, a problem that the RLM cannot be performed since the reference signal cannot be sent caused by no resource monitored at a specific frequency point can be avoided. The RLM operations on multiple frequency points adopt the same out-of-sync counter and/or the same in-sync counter, so that an out-of-sync problem caused by a certain frequency point can be avoided. Or, the terminal device receives the system information on the determined frequency point, which can avoid a problem that subsequent communication cannot be performed since the terminal device cannot obtain the system information.

Combined with the sixth aspect, in a possible implementation of the sixth aspect, the multiple frequency points or cells belong to an unlicensed frequency band.

Combined with the sixth aspect or any of the above possible implementations, in another possible implementation of the sixth aspect, the method further includes: the terminal device receives a notification message sent by a network device, wherein the notification message is used for indicating a frequency point for sending a reference signal; determining, by the terminal device, the frequency point on which the Radio Link Monitoring (RLM) operation is performed from the multiple frequency points includes: the terminal device determines the frequency point indicated by the notification message as the frequency point on which the RLM operation is performed.

Combined with the sixth aspect or any of the above possible implementations, in another possible implementation of the sixth aspect, performing, by the terminal device, the RLM operation on the determined frequency point includes: the terminal device performs the RLM operation within a time window.

Combined with the sixth aspect or any of the above possible implementations, in another possible implementation of the sixth aspect, performing, by the terminal device, the RLM operation within the time window includes: the terminal device increases an out-of-sync counter by one if the reference signal is not received at an end of the time window.

In a seventh aspect, a wireless communication method is provided. The wireless communication method includes: a terminal device determines a time window; and the terminal device performs a Radio Link Monitoring (RLM) operation on an unlicensed frequency band within the time window.

Therefore, in the embodiment of the present application, the terminal device performs the Radio Link Monitoring (RLM) operation on the unlicensed frequency band within the time window, which can increase a probability of receiving the reference signal and avoid an out-of-sync problem caused by incapacity of performing the RLM.

Combined with the seventh aspect, in a possible implementation of the seventh aspect, performing, by the terminal device, the RLM operation on the unlicensed frequency band within the time window includes: increasing, by the terminal device, an out-of-sync counter by one if a reference signal is not received on the unlicensed frequency band at an end of the time window.

In an eighth aspect, there is provided a communication device for performing the method in any one of the above aspects or respective implementations of the above aspects.

Specifically, the communication device includes functional modules for performing the method in any one of the above aspects or respective implementations of the above aspects.

In a ninth aspect, there is provided a communication device including a processor and a memory. The memory is configured to store a computer program, and the processor is configured to call and run the computer program stored in the memory to perform the method in any one of the above aspects or respective implementations of the above aspects.

In a tenth aspect, there is provided a chip for performing the method in any one of the above aspects or respective implementations of the above aspects.

Specifically, the chip includes a processor for calling and running a computer program from a memory, enabling a device on which the chip is mounted to perform the method in any one of the above aspects or respective implementations of the above aspects.

In an eleventh aspect, there is provided a computer-readable storage medium for storing a computer program that enables a computer to perform the method in any one of the above aspects or respective implementations of the above aspects.

In a twelfth aspect, there is provided a computer program product including computer program instructions that enable a computer to perform the method in any one of the above aspects or respective implementations of the above aspects.

In a thirteenth aspect, there is provided a computer program which, when running on a computer, enables the computer to perform the method in any one of the above aspects or respective implementations of the above aspects.

### Brief Description of Drawings

FIG. 1 is a schematic diagram of a wireless communication system according to an embodiment of the present application.
FIG. 2 is a schematic flowchart of a wireless communication method according to an embodiment of the present application.
FIG. 3 is a schematic flowchart of a wireless communication method according to an embodiment of the present application.
FIG. 4 is a schematic flowchart of a wireless communication method according to an embodiment of the present application.
FIG. 5 is a schematic flowchart of a wireless communication method according to an embodiment of the present application.
FIG. 6 is a schematic flowchart of a wireless communication method according to an embodiment of the present application.
FIG. 7 is a schematic flowchart of a wireless communication method according to an embodiment of the present application.
FIG. 8 is a schematic flowchart of a wireless communication method according to an embodiment of the present application.
FIG. 9 is a schematic flowchart of a wireless communication method according to an embodiment of the present application.
FIG. 10 is a schematic flowchart of a wireless communication method according to an embodiment of the present application.
FIG. 11 is a schematic flowchart of a wireless communication method according to an embodiment of the present application.
FIG. 12 is a schematic block diagram of a network device according to an embodiment of the present application.
FIG. 13 is a schematic block diagram of a network device according to an embodiment of the present application.
FIG. 14 is a schematic block diagram of a network device according to an embodiment of the present application.
FIG. 15 is a schematic block diagram of a terminal device according to an embodiment of the present application.
FIG. 16 is a schematic block diagram of a network device according to an embodiment of the present application.
FIG. 17 is a schematic block diagram of a terminal device according to an embodiment of the present application.
FIG. 18 is a schematic block diagram of a terminal device according to an embodiment of the present application.
FIG. 19 is a schematic block diagram of a communication device according to an embodiment of the present application.
FIG. 20 is a schematic block diagram of a chip according to an embodiment of the present application.
FIG. 21 is a schematic block diagram of a communication system according to an embodiment of the present application.

### Detailed Description

Technical solutions in the embodiments of the present application will be clearly and completely described below with reference to the drawings in the embodiments of the present application.

The technical solution in embodiments of the present application will be described below with reference to the drawings in embodiments of the present application. It is apparent that the embodiments described are just some embodiments of the present application, but not all embodiments of the present application. According to the embodiments of the present application, all other embodiments achieved by a person of ordinary skill in the art without paying an inventive effort are within the protection scope of the present application.

The technical solutions of the embodiments of the present application may be applied to various communication systems, such as a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, a LTE Frequency Division Duplex (FDD) system, a LTE Time Division Duplex (TDD) system, a Universal Mobile Telecommunication System (UMTS), a Worldwide Interoperability for Microwave Access (WiMAX) communication system, or a 5G system.

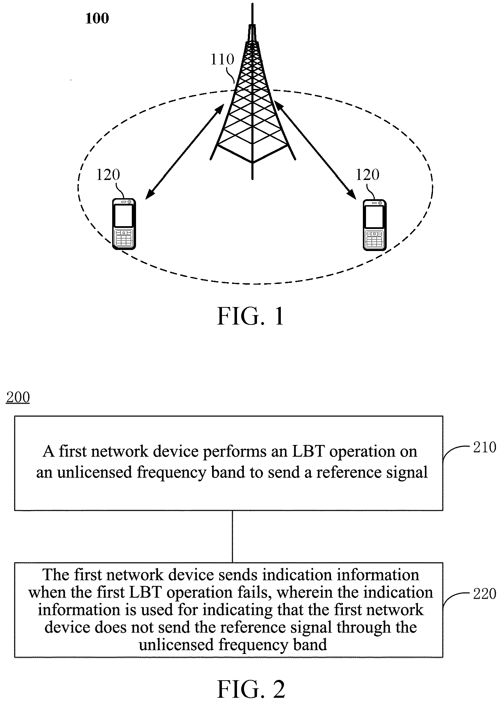

Illustratively, a communication system 100 applied in an embodiment of the present application is shown in FIG. 1. The communication system 100 may include a network device 110, and the network device 110 may be a device that communicates with a terminal device 120 (or referred to as a communication terminal, or a terminal). The network device 110 may provide communication coverage for a specific geographical area, and may communicate with terminal devices located within the coverage area. Optionally, the network device 110 may be a Base Transceiver Station (BTS) in a GSM system or CDMA system, a NodeB (NB) in a WCDMA system, an Evolutional Node B (eNB or eNodeB) in a LTE system, or a radio controller in a Cloud Radio Access Network (CRAN), or the network device may be a network side device in a mobile switch center, a relay station, an access point, a vehicle-mounted device, a wearable device, a hub, a switch, a bridge, a router, or a network side device in a 5G network, or a network device in a future evolved Public Land Mobile Network (PLMN), etc.

The communication system 100 also includes at least one terminal device 120 located within the coverage area of the network device 110. As used herein, the term "terminal device" includes, but not limited to, a device configured to connect via a wired circuit, for example, via a Public Switched Telephone Network (PSTN), a Digital Subscriber Line (DSL), a digital cable, a direct cable; and/or another data connection/network; and/or via a wireless interface, for instance, for a cellular network, a Wireless Local Area Network (WLAN), a digital television network such as a Digital Video Broadcasting-Handheld (DVB-H) network, a satellite network, and an AM-FM broadcast transmitter; and/or an apparatus, of another communication terminal, configured to receive/send a communication signal; and/or an Internet of Things (IoT) device. A terminal device configured to communicate via a wireless interface may be referred to as a "wireless communication terminal", a "wireless terminal" or a "mobile terminal". Examples of the mobile terminal include, but not limited to, a satellite or cellular telephone, a Personal Communication System (PCS) terminal capable of combining with a cellular wireless telephone and data processing, faxing, and data communication abilities, a Personal Digital Assistant (PDA) that may include a radio telephone, a pager, an internet/intranet access, a Web browser, a memo pad, a calendar, and/or a Global Positioning System (GPS) receiver, and a conventional laptop and/or palmtop receiver or another electronic apparatus including a radio telephone transceiver. The terminal device may be referred to as an access terminal, a User Equipment (UE), a subscriber unit, a subscriber station, a mobile station, a mobile platform, a remote station, a remote terminal, a mobile device, a user terminal, a terminal, a wireless communication device, a user agent, or a user apparatus. The access terminal may be a cellular phone, a cordless phone, a Session Initiation Protocol (SIP) phone, a Wireless Local Loop (WLL) station, a Personal Digital Assistant (PDA), a handheld device with a wireless communication function, a computing device, or another processing device connected to a wireless modem, a vehicle-mounted device, a wearable device, a terminal device in a 5G network, or a terminal device in a future evolved Public Land Mobile Network (PLMN), or the like.

Optionally, terminal direct connection (Device to Device, D2D) communication may be performed between the terminal devices 120.

Optionally, the 5G system or 5G network may be referred to as a New Radio (NR) system or a NR network.

FIG. 1 exemplifies one network device and two terminal devices. Optionally, the communication system 100 may include multiple network devices, and another quantity of terminal devices may be included within the coverage area of each network device, which is not limited in embodiments of the present application.

Optionally, the communication system 100 may include other network entities such as a network controller, and a mobile management entity. Embodiments of the present application are not limited thereto.

It should be understood that, a device with a communication function in a network/system in the embodiment of the present application may be referred to as a communication device. The communication system 100 shown in FIG. 1 is taken as an example, the communication device may include a network device 110 and a terminal device 120 which have communication functions, and the network device 110 and the terminal device 120 may be the specific devices described above, which will not be described here again. The communication device may also include other devices in the communication system 100, such as network controllers, mobile management entities, and other network entities, and the embodiments of the present application are not limited thereto.

It should be understood that the terms "system" and "network" are often used interchangeably in this document. The term "and/or" in this document is merely an association relationship describing associated objects, indicating that there may be three relationships, for example, A and/or B may indicate three cases: A alone, A and B, and B alone. In addition, the symbol "/" in this document generally indicates that objects before and after the symbol "/" have an "or" relationship.

To clearly understand the present application, the scenarios that may be used in the embodiments of the present application will be explained by way of examples below, but it should be understood that the embodiments of the present application may also be used in other scenarios.

A new radio unlicensed frequency band (NR-U) technology may be applied in a StandAlone (SA) network scenario, a Non-StandAlone (NSA) network scenario and a Dual Connectivity (DC) network scenario.

In the SA network scenario, a New Radio (NR) secondary base station that can support a Primary Cell (PCell) function may not be configured. In the SA network scenario, a network device (e.g., a base station or a network node) may serve a terminal device, and the network device may use a licensed frequency band and an unlicensed frequency band to serve the terminal device.

In the NSA network scenario, a Master Node (MN) and a NR secondary base station (for example, a Secondary Node (SN)) that can support a Primary Cell (PCell) function may be configured. The MN may support a licensed frequency band, and the SN may support an unlicensed frequency band.

In the DC scenario, multiple network devices or nodes may be configured to communicate with terminals, wherein the multiple network devices may include an MN and an SN, the MN may support a licensed frequency band and the SN may support an unlicensed frequency band.

When it is needed to use the unlicensed frequency band for transmission, channel quality monitoring, for example, RLM, may be performed on the unlicensed frequency band.

For example, in the SA scenario, an RLM function may be performed on a PCell on the unlicensed frequency band. In the NSA scenario, when the MN supports the licensed frequency band, the RLM function may be performed on a Primary Secondary Cell (PSCell) of the SN on the unlicensed frequency band. In the DC scenario, when the MN supports the licensed frequency band, the RLM function may be performed on the PSCell of the SN on the unlicensed frequency band.

A technical challenge of performing the channel quality monitoring on the unlicensed frequency band comes from a fact that the LBT operation on the downlink of the network side possibly fails, that is, it is possible that a channel cannot be obtained. In this case, the network device cannot send a reference signal (for example, a Synchronous Signal Block (SSB) or Channel State Information Reference Signal (CSI-RS)) on a fixed time-frequency resource. If the network device does not send the reference signal, a measured value at the terminal will be very low. In this case, the terminal cannot distinguish whether the too low measured value of the reference signal is caused by a reason, such as power and path loss, or no sending of the reference signal at the network device side, thus the RLM operation cannot be performed. Therefore, embodiments of the present application provide the following solutions to solve such problem.

FIG. 2 is a schematic flowchart of a wireless communication method 200 according to an embodiment of the present application. The method 200 includes at least some of the following contents.

Optionally, in an embodiment of the present application, the method may be applied in the SA network scenario, the NSA network scenario and the DC network scenario.

Optionally, in an embodiment of the present application, a first network device mentioned below may be an SN, and a second network device mentioned below may be an MN

In 210, a first network device performs a first Listen Before Talk (LBT) operation on an unlicensed frequency band to send a reference signal.

Specifically, the first network device may listen on the unlicensed frequency band after sending the reference signal on the unlicensed frequency band, and when listening to an available channel or resource, the first network device may send the reference signal.

In an embodiment of the present application, the LBT operation is considered as success when no available channel or resource is listened to, and the LBT operation may be considered as success when an available channel or resource is listened to.

Optionally, in an embodiment of the present application, the first network device performs the first LBT on the unlicensed frequency band within the time window; and failure of the first LBT operation means that no available resource is monitored within the time window.

Specifically, when the first network device needs to send the reference signal on the unlicensed frequency band, the first network device may listen to a channel within a time window. If no available resource is monitored within this window, the first LTB may be considered as failure. Therefore, performing LBT within the time window can increase a probability of monitoring an available resource.

Optionally, in an embodiment of the present application, the reference signal may include an SSB and/or CSI-RS, and a terminal device may perform, for example, an RLM, based on the reference signal to determine a channel quality of a downlink channel.

The network device may configure parameters for the RLM, including Qin, Qout, N310, N311 and other parameters, through Radio Resource Control (RRC) signaling. If a signal quality obtained through measurement of the terminal device is higher than an in-sync threshold Qin, a physical layer of the terminal device may report an in-sync (IS) indication to a high layer, otherwise, if the signal quality obtained through measurement of the terminal device is lower than an out-of-sync threshold Qout, the physical layer of the terminal device reports an out-of-sync (OOS) indication to the high layer. If the high layer of the terminal device receives N310 consecutive OOS indications from the physical layer (here, it is assumed that other timers, such as timer T311, are not running, and the RLM under a timer T310 mechanism is only considered in this embodiment of the present application), then the timer T310 is started. When the high layer of the terminal device receives N311 consecutive IS indications from the physical layer and the timer T310 is running (that is, the timer T310 has not expired yet), then the timer T310 is stopped. If the high layer of the terminal device does not receive N311 consecutive IS indications before the timer T310 expires, the terminal device considers Radio Link Failure (RLF).

Optionally, in an embodiment of the present application, the unlicensed frequency band may include multiple frequency points. In view of such situation, there may be two implementations.

In one implementation, the first network device performs the first LBT operation on multiple frequency points of the unlicensed frequency band; and failure of the first LBT operation means that no available resource is monitored on the multiple frequency points, and out-of-sync counters corresponding to RLM operations are the same counter and/or in-sync counters corresponding to RLM operations are the same counter.

In the other implementation, RLM operations on the multiple frequency bands are performed independently, and the out-of-sync counters and/or in-sync counters corresponding to the RLM operations are independent.

Optionally, in an embodiment of the present application, the first network device may indicate the LBT on a PCell or PSCell on the unlicensed frequency band, so as to send the reference signal on the PCell or PSCell on the unlicensed frequency band.

In 220, the first network device sends indication information when the first LBT operation fails, wherein the indication information is used for indicating that the first network device does not send the reference signal through the unlicensed frequency band.

Optionally, in an embodiment of the present application, when the first LBT operation fails, the first network device may give up sending the reference signal or delay sending the reference signal within a specific time window.

It should be understood that in the embodiment of the present application, not sending the reference signal through the unlicensed frequency band or giving up sending the reference signal through the unlicensed frequency band by the first network device means that when a certain LBT operation performed fails, the first network device gives up sending the reference signal that needs to be sent this time, and when the LBT operations performed at other time (other secondary reference signal sending points) are successfully.

In a case that the first network device gives up sending the reference signal, the first network device may send indication information to the network device. The indication information is used for indicating that the first network device does not send the reference signal through the unlicensed frequency band, wherein the indication information may optionally indicate which reference signal is given up sending (for example, it may be indicated through an indication of an occupied time domain resource, etc.). Of course, there may be no need to indicate which reference signal is given up sending, for example, next sending time of a reference signal is after sending time of the indication information.

Several implementations for the first network device to send the indication information will be described below. However, it should be understood that the embodiments of the present application are not limited thereto.

In one implementation, the first network device performs a second LBT operation on the unlicensed frequency band; when the second LBT operation succeeds, the second network device sends the indication information to a terminal device through the unlicensed frequency band.

Specifically, when the first network device gives up sending the reference signal (specifically, the given up sending may be a certain sending of the reference signal or sending of a certain segment of reference signals), the first network device may perform an LBT operation on an unlicensed frequency band, and if the LBT operation succeeds, the second network device sends the indication information to a terminal device through the unlicensed frequency band, wherein the indication information indicates that one certain reference signal or some reference signals are not sent through the unlicensed frequency band.

This implementation may be applied in the SA, NSA and DC scenarios.

In this implementation, sending the indication information through the unlicensed frequency band by the first network device means that after the first network device fails to send the reference signal, the first network device may continue to send signaling to UE through the LBT operation. The advantage of this implementation is that load of the second network device is not increased.

Optionally, in this implementation, the first network device may send the indication information to the terminal device through Radio Resource Control (RRC) signaling between the first network device and the terminal device, that is, the first network device may send the indication information to the terminal device by using the RRC signaling. Of course, the indication information may also be sent through other messages, such as a broadcast message, physical layer signaling or Media Access Control (MAC) layer signaling.

In one implementation, the first network device sends the indication information to the terminal device through a licensed frequency band.

Specifically, when the first network device gives up sending the reference signal (specifically, the given up sending may be a certain sending of the reference signal or sending of a certain segment of reference signals), if the first network device may communicate with the terminal device through the licensed frequency band, the first network device may send the indication information to the terminal device through the licensed frequency band.

This implementation may be applied in, but not limited to, the NSA, SA and DC network scenarios.

By this implementation, sending of the indication information may be guaranteed, or indication information is sent on time.

Optionally, in this implementation, the first network device may send the indication information to the terminal device through Radio Resource Control (RRC) signaling connection between the first network device and the terminal device, that is, the first network device may send the indication information to the terminal device by using the RRC signaling. Of course, the indication information may also be sent through other messages, such as a broadcast message, physical layer signaling or Media Access Control (MAC) layer signaling.

In one implementation, the first network device sends the indication information to a second network device.

Specifically, when the first network device gives up sending the reference signal (specifically, the given up sending may be a certain sending of the reference signal or sending of a certain segment of reference signals), the first network device may send the indication information to the second network device through an Xn/X2 interface between the first network device and the second network device, so that the second network device can indicate to the terminal device through a licensed frequency band that the first network device does not send the reference signal through the unlicensed frequency band. Since the licensed frequency band is reliable, sending of the indication information may be guaranteed, or the indication information may be sent on time. In this case, the second network device may optionally send the indication information to the terminal device through a PCell.

Optionally, in this implementation, the second network device may send the indication information to the terminal device through Radio Resource Control (RRC) signaling connection between the second network device and the terminal device, that is, the second network device may send the indication information to the terminal device by using the RRC signaling. Of course, the indication information may also be sent through other messages, such as a broadcast message, physical layer signaling or Media Access Control (MAC) layer signaling.

Or, the second network device may not indicate to the terminal device through the licensed frequency band that the first network device does not sent the reference signal through the unlicensed frequency band, but may determine a condition between the first network device and the terminal device based on the quantity of received indication information to determine whether to modify a network device serving the terminal device from the first network device to another network device, or modify the PSCell or PCell of the first network device. In this case, the first network device optionally performs the LBT operation on the PCell or PSCell on the unlicensed frequency band, so as to send the reference signal on the PCell or PSCell on the unlicensed frequency band.

Optionally, in an embodiment of the present application, the first network device and the second network device adopt different Radio Access Technologies (RATs); and the indication information is information encoded with Abstract Syntax Notation One (ASN.1) by the first network device.

Specifically, the first network device and the second network device may adopt the same Radio Access Technology (RAT) or different RATs (for example, the first network device is an NR access network device, and the second network device is an LTE access network device). If the RATs adopted are different, the first network device may encode the indication information with ASN.1 according to the RAT adopted by the first network device, and may deliver the encoded indication information to the second network device. After receiving the encoded indication information, the second network device does not encode the encoded indication information with the ASN.1 any longer and delivers the encoded indication information to the terminal device. In this case, the first network device may send information to the second network device along with the indication information to indicate the second network device to send the indication information to the terminal device.

Optionally, in an embodiment of the present application, the first network device sends at least one piece of the following information to the second network device: timing information of the reference signal at a first network device side; a time-frequency resource position for sending the reference signal; a time window for sending the reference signal; a period for sending the reference signal; and a type of the reference signal.

Specifically, the first network device and the second network device may be synchronous or asynchronous. In a synchronous scenario, the timing of the second network device and the timing of the first network device are the same (for example, in the NAS or DC scenario, the timing of PCell on the second network device and the timing of PSCell on the first network device may be the same), while in a case that the first network device and the second network device are asynchronous, timing information of the first network device and timing information of the second network device are different. Since the type of the reference signal that cannot be sent may be indicated to the second network device in the signaling notified to the terminal device, specific parameters may be different due to in-sync and out-of-sync: timing information of the reference signal at a first network device side, a time-frequency resource position of the reference signal, or a period or a time window for sending, or the type of the reference signal or the like, the above information may be sent to the second network device, and the second network device may send the indication information to the terminal device according to the above information.

It should be understood that the implementations by which the first network device sends the indication information are described above, but the embodiments of the present application are not limited thereto, and the embodiments of the present application may also have other implementations.

Optionally, in an embodiment of the present application, after the terminal device receives the indication information sent by the first network device or the second network device, the terminal device may determine that there is no need to increase the out-of-sync counter by one for sending of the reference signal this time. Therefore, if a counting operation has been performed on the out-of-sync counter and/or in-sync counter, the count of the out-of-sync counter and/or in-sync counter may be adjusted. For example, the out-of-sync counter that has been increased by one may be subtracted by one, thus avoiding an improper in-sync or out-of-sync operation.

Optionally, in an embodiment of the present application, the first network device sends statistical information to the second network device, wherein the statistical information is used for indicating a number of times the reference signal is not successfully sent on the unlicensed frequency band.

Therefore, the second network device may determine a condition between the first network device and the terminal device based on the received statistical information, to determine whether to modify a network device serving the terminal device from the first network device to another network device, or modify the PCell or PSCell of the first network device. In this case, the first network device optionally performs the LBT operation on the PCell or PSCell on the unlicensed frequency band, so as to send the reference signal on the PCell or PSCell on the unlicensed frequency band.

Optionally, in an embodiment of the present application, the second network device sends a notification message to the first network device, accordingly the first network device receives the notification message sent by the second network device, wherein the notification message is used for notifying that a network device serving the terminal device is modified from the network device to another network device, or for notifying that a Primary Cell (PCell) or a Primary Secondary Cell (PSCell) of the first network device is modified.

Therefore, in an embodiment of the present application, when the reference signal is not sent due to the failure of the LBT operation on the unlicensed frequency band, the network device may send the indication information, which can avoid an improper in-sync or out-of-sync operation.

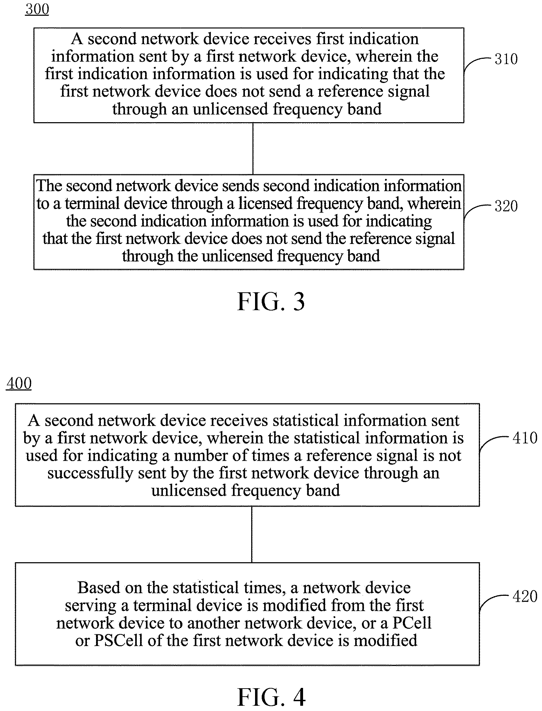

FIG. 3 is a schematic flowchart of a wireless communication method 300 according to an embodiment of the present application. As shown in FIG. 3, the wireless communication method 300 includes at least some of the following contents.

Optionally, in an embodiment of the present application, the method may be applied in the NSA network scenario and the DC network scenario.

Optionally, in an embodiment of the present application, a first network device mentioned below may be an SN, and a second network device mentioned below may be an MN

In 310, a second network device receives first indication information sent by a first network device, wherein the first indication information is used for indicating that the first network device does not send a reference signal through an unlicensed frequency band.

In 320, the second network device sends second indication information to a terminal device through a licensed frequency band, wherein the second indication information is used for indicating that the first network device does not send the reference signal through the unlicensed frequency band.

Optionally, in an embodiment of the present application, the first network device and the second network device adopt different Radio Access Technologies (RATs); and the second indication information includes information encoded with Abstract Syntax Notation One (ASN.1) by the first network device in the first indication information; and the second indication information includes the first indication information.

Optionally, in an embodiment of the present application, the second network device receives at least one piece of the following information sent by the first network device: timing information of the reference signal at a first network device side; a time-frequency resource position for sending the reference signal; a period for sending the reference signal; a time window for sending the reference signal; and a type of the reference signal.

The second network device sends the second indication information to the terminal device through the licensed frequency band based on the at least one piece of the information.

Optionally, in an embodiment of the present application, the second network device determines the number of times the reference signal is not successfully sent by the first network device through the unlicensed frequency band; and based on statistical information, the second network device modifies a network device serving the terminal device from the first network device to another network device, or modifies a PCell or PSCell of the first network device.

In one implementation, the second network device receives statistical information sent by the first network device, wherein the statistical information is used for indicating the number of times the reference signal is not successfully sent by the first network device through the unlicensed frequency band; and based on the statistical information, the second network device determines the number of times the reference signal is not successfully sent by the first network device through the unlicensed frequency band.

In another implementation, the second network device determines the number of times the reference signal is not successfully sent by the first network device through the unlicensed frequency band according to a number of times the first network device sends the first indication information to the second network device.

Optionally, the method 300 may be applied to a case that a series of reference signals cannot be sent on the PSCell of the SN. In this case, it is difficult for the terminal device to continue to perform the RLM function, so modification of the PSCell or even modification of the SN may be triggered.

It should be understood that the first indication information in the method 300 may correspond to the indication information in the method 200.

It should be understood that the description in the method 200 may be applied to the method 300. For example, description of functions of the second network device or definition or explanation of some terms in the method 200 may be used as optional implementations of the method 300, which is not described here for brevity.

Therefore, in the embodiment of the present application, the second network device receives first indication information sent by the first network device, wherein the first indication information is used for indicating that the first network device does not send the reference signal through the unlicensed frequency band. The second network device sends second indication information to the terminal device through the licensed frequency band, wherein the second indication information is used for indicating that the first network device does not send the reference signal through the unlicensed frequency band, so that the terminal device can avoid an improper in-sync or out-of-sync operation. And the terminal device sends the second indication information through the licensed frequency band, so that sending of the second indication information can be guaranteed, or the second indication information can be sent on time.

FIG. 4 is a schematic flowchart of a wireless communication method 400 according to an embodiment of the present application. The method 400 includes at least some of the following contents.

Optionally, in an embodiment of the present application, the method may be applied in the NSA network scenario and the DC network scenario.

Optionally, in an embodiment of the present application, a first network device mentioned below may be an SN, and a second network device mentioned below may be an MN

In 410, a second network device receives statistical information sent by a first network device, wherein the statistical information is used for indicating a number of times a reference signal is not successfully sent by the first network device through an unlicensed frequency band.

In 420, based on the statistical times, a network device serving a terminal device is modified from the first network device to another network device, or a PCell or PSCell of the first network device is modified.

Optionally, the method 400 may be applied to a case that a series of reference signals cannot be sent on the PSCell of the SN. In this case, it is difficult for the terminal device to continue to perform the RLM function, so modification of the PSCell or even modification of the SN may be triggered.

It should be understood that in addition to the statistical information of the first network device, according to other ways the second network device may also determine the number of times the reference signal is not successfully sent by the first network device through the unlicensed frequency band.

It should be understood that the description in the method 200 may be applied to the method 400. For example, description of functions of the second network device or definition or explanation of some terms in the method 400 may be used as optional implementations of the method 400, which is not described here for brevity.

Therefore, in the embodiment of the present application, the second network device receives statistical information sent by the first network device, wherein the statistical information is used for indicating the number of times the reference signal is not successfully sent by the first network device through the unlicensed frequency band, so that based on the statistical times, the network device serving the terminal device may be modified from the first network device to another network device, or the PCell or the PSCell of the first network device may be modified, thus avoiding a problem of a poor communication system caused by using an improper network device or PCell or PSCell serving the terminal device.

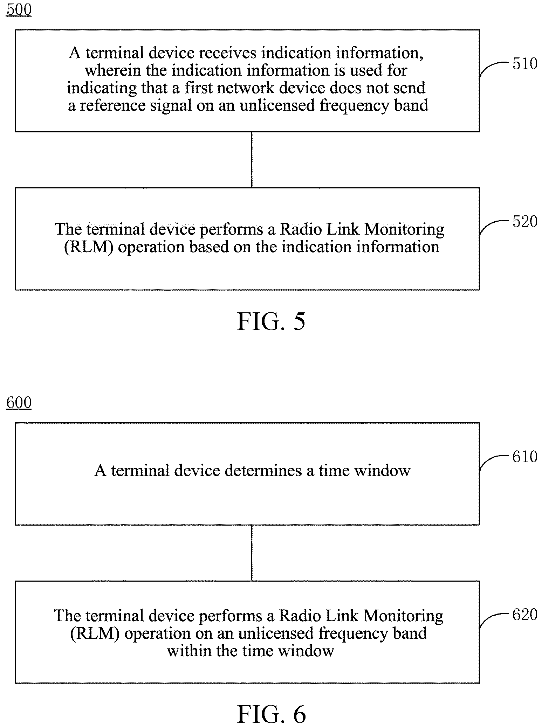

FIG. 5 is a schematic flowchart of a wireless communication method 500 according to an embodiment of the present application. The method 500 includes at least some of the following contents.

Optionally, in an embodiment of the present application, the method may be applied in the SA network scenario, the NSA network scenario and the DC network scenario.

Optionally, in an embodiment of the present application, a first network device mentioned below may be an SN, and a second network device mentioned below may be an MN

In 510, a terminal device receives indication information, wherein the indication information is used for indicating that a first network device does not send a reference signal on an unlicensed frequency band.

In 520, the terminal device performs a Radio Link Monitoring (RLM) operation based on the indication information.

Optionally, in an embodiment of the present application, the terminal device adjusts an out-of-sync counter and/or an in-sync counter corresponding to the RLM operation, based on the indication information.

Optionally, in an embodiment of the present application, the terminal device receives the indication information sent by the first network device through the unlicensed frequency band; or, the termina receives the indication information sent by a second network device through a licensed frequency band.

Optionally, in an embodiment of the present application, signaling for notifying the terminal device on an air interface that a certain reference signal is missing may be RRC signaling or another signaling (such as MAC layer signaling, physical layer signaling, etc.).

It should be understood that the description in the method 200 may be applied to the method 500. For example, description of functions of the terminal device or definition or explanation of some terms in the method 500 may be used as optional implementations of the method 500, which is not described here for brevity.

Therefore, in the embodiment of the present application, the terminal device receives the indication information that the network device does not sent the reference signal on the unlicensed frequency band due to the failure of the LBT operation, and may perform the RLM based on the indication information, thus avoiding an improper in-sync or out-of-sync operation.

FIG. 6 is a schematic flowchart of a wireless communication method 600 according to an embodiment of the present application. The method 600 includes at least some of the following contents.

In 610, a terminal device determines a time window.

In 620, the terminal device performs a Radio Link Monitoring (RLM) operation on an unlicensed frequency band within the time window.

Optionally, in an embodiment of the present application, the terminal device increases the out-of-sync counter by one if the reference signal is not received on the unlicensed frequency band at an end of the time window.

Optionally, in an embodiment of the present application, when the first network device performs the LBT on the unlicensed frequency band to send the reference signal, the reference signal may be sent within a specific time window. If the reference signal has still not been normally sent beyond the time window, the first network device notifies the second network device of the indication information, and the second network device takes measures to modify the PSCell or SN, or notifies the UE. In this case, the first network device may notify the second network device of time window information. The terminal can determine that a certain reference signal is not received after the reference signal is not detected within the whole time window.

Therefore, in the embodiment of the present application, the terminal device performs the Radio Link Monitoring (RLM) operation on the unlicensed frequency band within the time window, which can increase a probability of receiving the reference signal and avoid an out-of-sync problem caused by incapacity of performing the RLM.

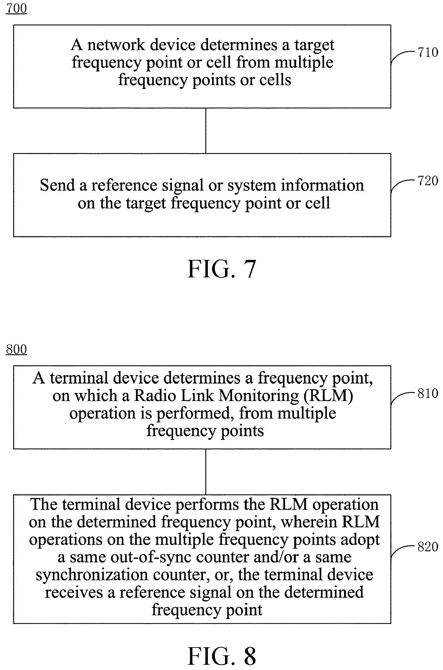

FIG. 7 is a schematic flowchart of a wireless communication method 700 according to an embodiment of the present application. The method 700 includes at least some of the following contents.

Optionally, in an embodiment of the present application, the method 700 may be applied in the SA, NSA or DC network scenario.

Optionally, in an embodiment of the present application, a network device mentioned below may be an SN in the NSA or the DC network scenario.

In 710, a network device determines a target frequency point or cell from multiple frequency points or cells.

Optionally, in an embodiment of the present application, the multiple frequency points or cells belong to an unlicensed frequency band.

Optionally, in an embodiment of the present application, the network device performs an LBT operation sequentially on the multiple frequency points; and the network device takes a frequency point with a successful LBT operation as the target frequency point.

Specifically, the network device may perform the LBT operation on the multiple frequency points in a certain sequence, and if an available resource is listened to on a certain frequency band, the LBT operation may not be performed on other frequency points any longer.

In 720, a reference signal or system information is sent on the target frequency point or cell.

Optionally, in an embodiment of the present application, the network device sends a notification message to a terminal device, wherein the notification message is used for indicating the target frequency point or cell for receiving the reference signal or system information.

The notification message may be sent through the target frequency point or cell, or through another frequency point or cell.

Optionally, in an embodiment of the present application, when one or more downlink reference signals cannot be sent by a base station due to the LBT, the reference signal may be sent through another frequency point, and the terminal device is informed by signaling of a frequency point on which the reference signal is. If the terminal device detects the reference signal on another frequency point, the terminal device may also continue to perform an RLM function. After the reference signal is sent on another frequency point and received by the UE, a Seondary Cell (Scell) corresponding to the another frequency point may be modified to a PCell or PSCell; of course, the Scell may not be modified.

Therefore, in the embodiment of the present application, the network device determines the frequency point from multiple frequency points and sends the reference signal on the determined frequency point, so that the terminal device performs the RLM operation, thereby avoiding a problem that the RLM cannot be performed since the reference signal cannot be sent caused by no resource monitored at a specific frequency point. Or, the network device sends the system information on the determined frequency point, which can avoid a problem that subsequent communication cannot be performed since the terminal device cannot obtain the system information.

FIG. 8 is a schematic flowchart of a wireless communication method 800 according to an embodiment of the present application. The method 800 includes at least some of the following contents.

In 810, a terminal device determines a frequency point, on which a Radio Link Monitoring (RLM) operation is performed, from multiple frequency points.

In 820, the terminal device performs the RLM operation on the determined frequency point, wherein RLM operations on the multiple frequency points adopt a same out-of-sync counter and/or a same in-sync counter, or, on the determined frequency point, the terminal device receives a reference signal.

Optionally, in an embodiment of the present application, the multiple frequency points or cells belong to an unlicensed frequency band.

Optionally, in an embodiment of the present application, the terminal device receives a notification message sent by a network device, where the notification message is used for indicating a frequency point for sending the reference signal; and the terminal device determines the frequency point indicated by the notification message as the frequency point on which the RLM operation is performed.

Optionally, in an embodiment of the present application, the terminal device performs the RLM operation within a time window.

Optionally, in an embodiment of the present application, the terminal device increases the out-of-sync counter by one if the reference signal is not received at an end of the time window.

Optionally, in an embodiment of the present application, the terminal device increases the in-sync counter by one if the reference signal is not received at an end of the time window.

Therefore, in the embodiment of the present application, the terminal device determines the frequency point, on which the RLM operation is performed, from multiple frequency points, and the terminal device performs the RLM operation on the determined frequency point, wherein the RLM operations on the multiple frequency points adopt the same out-of-sync counter and/or the same in-sync counter. Thus, a problem that the RLM cannot be performed since the reference signal cannot be sent caused by no resource monitored at a specific frequency point can be avoided. The RLM operations on multiple frequency points adopt the same out-of-sync counter and/or the same in-sync counter, so that an out-of-sync problem caused by a certain frequency point can be avoided. Or, the terminal device receives the system information on the determined frequency point, which can avoid a problem that subsequent communication cannot be performed since the terminal device cannot obtain the system information.

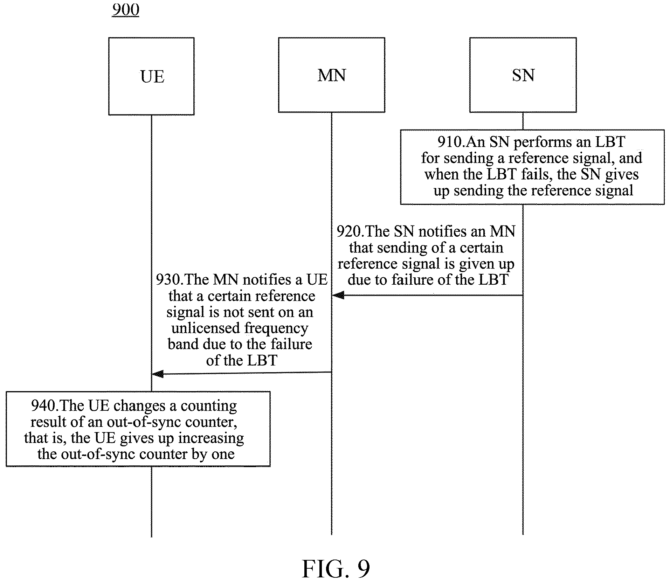

FIG. 9 is a schematic flowchart of a wireless communication method 900 according to an embodiment of the present application. The method 900 includes at least some of the following contents.

In 910, an SN performs an LBT operation, and when the LBT operation fails, the SN gives up sending a reference signal.

In 920, the SN notifies an MN that sending of a certain reference signal is given up due to failure of the LBT.

In 930, based on a notification from the SN, the MN notifies UE that a certain reference signal is not sent on an unlicensed frequency band due to the failure of the LBT.

In 940, the UE changes a counting result of an out-of-sync counter Qout, that is, the UE gives up increasing the out-of-sync counter Qout by one.

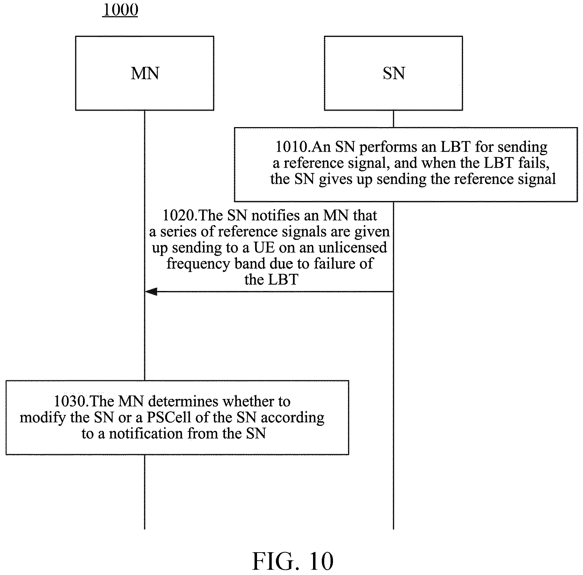

FIG. 10 is a schematic flowchart of a wireless communication method 1000 according to an embodiment of the present application. The method 1000 includes at least some of the following contents.

In 1010, an SN performs an LBT operation, and when the LBT operation fails, the SN gives up sending a reference signal.

In 1020, the SN notifies an MN that a series of reference signals are given up sending to UE on an unlicensed frequency band due to failure of the LBT.

In 1030, the MN determines whether to modify the SN or a PSCell of the SN according to a notification from the SN.

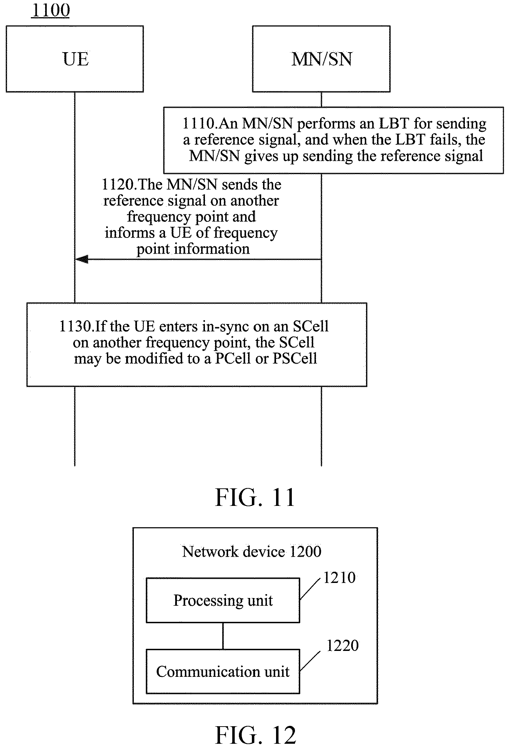

FIG. 11 is a schematic flowchart of a wireless communication method 1100 according to an embodiment of the present application. The method 1100 includes at least some of the following contents.

In 1110, an MN/SN performs an LBT operation, and when the LBT operation fails, the MN/SN gives up sending a reference signal.

In 1120, the MN/SN sends the reference signal on another frequency point and informs UE of frequency point information.

In 1130, if the UE enters in-sync on an SCell on another frequency point, the SCell may be modified to a PCell or PSCell.

It should be understood that the methods in the embodiments of the present application are not independent, but can be used in combination without a conflict, and the descriptions in various methods may be applied to other methods, which will not be repeated here for brevity.

FIG. 12 is a schematic block diagram of a network device 1200 according to an embodiment of the present application. As shown in FIG. 12, the network device 1200 includes a processing unit 1210 and a communication unit 1220.

The processing unit 1210 is configured to perform a first Listen Before Talk (LBT) operation on an unlicensed frequency band to send a reference signal.

The communication unit 1220 is configured to, when the first LBT operation fails, send indication information for indicating that the network device does not sent the reference signal through the unlicensed frequency band.

Optionally, the processing unit 1210 is further configured to perform a second LBT operation on the unlicensed frequency band.

The communication unit 1220 is further configured to send the indication information to a terminal device through the unlicensed frequency band by a second network device when the second LBT operation succeeds.

Optionally, the communication unit 1220 is further configured to send the indication information to the terminal device through a licensed frequency band.

Optionally, the communication unit 1220 is further configured to send the indication information to a second network device, where the indication information is used for the second network device to indicate to the terminal device through the licensed frequency band that the first network device does not send the reference signal through the unlicensed frequency band.

Optionally, the network device and the second network device adopt different Radio Access Technologies (RATs); and the indication information is information encoded with Abstract Syntax Notation One (ASN. 1) by the network device.

Optionally, the communication unit 1220 is further configured to send to the second network device at least one piece of the following information: timing information of the reference signal at a network device side; a time-frequency resource position for sending the reference signal; a time window for sending the reference signal; a period for sending the reference signal; and a type of the reference signal.

Optionally, the communication unit 1220 is further configured to send statistical information to the second network device, wherein the statistical information is used for indicating a number of times the reference signal is not successfully sent on the unlicensed frequency band.

Optionally, the communication unit 1220 is further configured to receive a notification message sent by the second network device, wherein the notification message is used for notifying that a network device serving the terminal device is modified from the network device to another network device, or for notifying that a Primary Cell (PCell) or a Primary Secondary Cell (PSCell) of the network device is modified.

Optionally, the network device is a Secondary Node (SN), and the second network device is a Master Node (MN).

Optionally, the processing unit 1210 is further configured to perform the first LBT operation on multiple frequency points of the unlicensed frequency band; wherein failure of the first LBT operation means that no available resource is monitored on the multiple frequency points.

Optionally, the processing unit 1210 is further configured to perform the first LBT operation on the unlicensed frequency band within a time window; wherein failure of the first

LBT operation means that no available resource is monitored within the time window.

Optionally, the indication information is carried in Radio Resource Control (RRC) signaling, physical layer signaling, or Media Access Control (MAC) layer signaling.

Optionally, the device is applied in an SA network scenario.

Optionally, the device is applied in an NSA network scenario or a DC network scenario.

It should be understood that the network device 1200 may implement the corresponding operations implemented by the first network device in the above methods, which will not be repeated here for brevity.

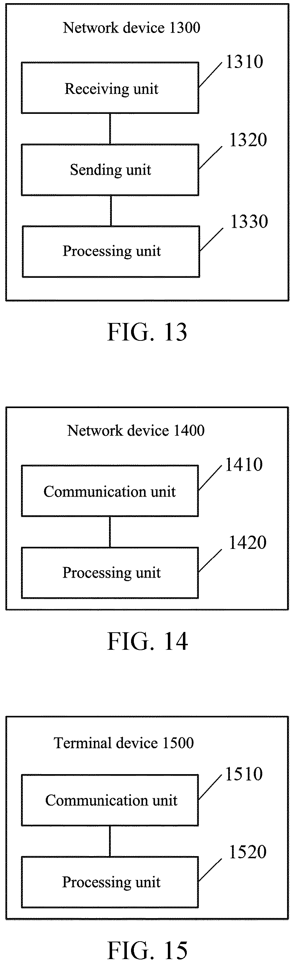

FIG. 13 is a schematic block diagram of a network device 1300 according to an embodiment of the present application. The network device 1300 includes a receiving unit 1310 and a sending unit 1320.

The receiving unit 1310 is configured to receive first indication information sent by a first network device, wherein the first indication information is used for indicating that the first network device does not send a reference signal through an unlicensed frequency band.

The sending unit 1320 is configured to send second indication information to a terminal device through a licensed frequency band, wherein the second indication information is used for indicating that the first network device does not send the reference signal through the unlicensed frequency band.

Optionally, the first network device and the network device adopt different Radio Access Technologies (RATs); and the second indication information includes information encoded with Abstract Syntax Notation One (ASN.1) by the first network device in the first indication information; and the second indication information includes the first indication information.

Optionally, the receiving unit 1310 is further configured to receive at least one piece of the following information sent by the first network device: timing information of the reference signal at a first network device side; a time-frequency resource position for sending the reference signal; a period for sending the reference signal; a time window for sending the reference signal; and a type of the reference signal.

The sending unit 1320 is further configured to send the second indication information to the terminal device through the licensed frequency band based on the at least one piece of the information.

Optionally, as shown in FIG. 13, the network device 1300 further includes a processing unit 1330 configured to determine a number of times the reference signal is not successfully sent by the first network device through the unlicensed frequency band; based on the statistical information, modify a network device serving the terminal device from the first network device to another network device, or modify a PCell or PSCell of the first network device.

Optionally, the receiving unit 1310 is further configured to receive statistical information sent by the first network device, wherein the statistical information is used for indicating a number of times the reference signal is not successfully sent by the first network device through the unlicensed frequency band.

The processing unit 1330 is further configured to determine, based on the statistical information, a number of times the reference signal is not successfully sent by the first network device through the unlicensed frequency band.

Optionally, the processing unit 1330 is further configured to determine the number of times the reference signal is not successfully sent by the first network device through the unlicensed frequency band according to a number of times the first network device sends the first indication information to the network device.

Optionally, the first network device is a Secondary Node (SN), and the network device is a Master Node (MN).

Optionally, the device is applied in an NSA network scenario or a DC network scenario.

It should be understood that the network device 1300 may implement the corresponding operations implemented by the second network device in the above methods, which will not be repeated here for brevity.

FIG. 14 is a schematic block diagram of a network device 1400 according to an embodiment of the present application. The network device 1400 includes a communication unit 1410 and a processing unit 1420.

The communication unit 1410 is configured to receive statistical information sent by a first network device, wherein the statistical information is used for indicating a number of times a reference signal is not successfully sent by the first network device through an unlicensed frequency band.

The processing unit 1420 is configured to, based on the statistical times, modify a network device serving the terminal device from the first network device to another network device, or modify a PCell or PSCell of the first network device.

Optionally, the device is applied in an NSA network scenario or a DC network scenario.

It should be understood that the network device 1400 may implement the corresponding operations implemented by the network device in the above method, which will not be repeated here for brevity.

FIG. 15 is a schematic block diagram of a terminal device 1500 according to an embodiment of the present application. The terminal device 1500 includes a communication unit 1510 and a processing unit 1520.

The communication unit 1510 is configured to receive indication information, wherein the indication information is used for indicating that a first network device does not send a reference signal on an unlicensed frequency band.

The processing unit 1520 is configured to perform a Radio Link Monitoring (RLM) operation based on the indication information.

Optionally, the processing unit 1520 is further configured to adjust an out-of-sync counter and/or an in-sync counter corresponding to the RLM operation based on the indication information.

Optionally, the communication unit 1510 is further configured to receive the indication information sent by the first network device through the unlicensed frequency band; or, receive the indication information sent by a second network device through a licensed frequency band.

Optionally, the first network device is a Secondary Node (SN), and the second network device is a Master Node (MN).

It should be understood that the terminal device 1500 may implement the corresponding operations implemented by the terminal device in the above methods, which will not be repeated here for brevity.

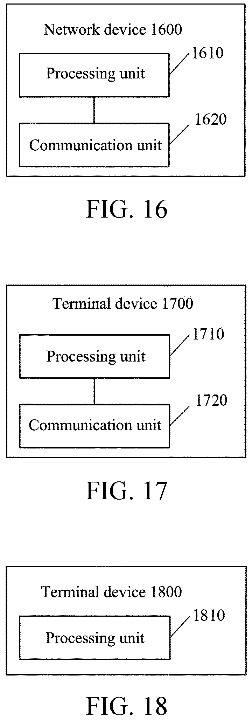

FIG. 16 is a schematic block diagram of a network device 1600 according to an embodiment of the present application. The network device 1600 includes a processing unit 1610 and a communication unit 1620.

The processing unit 1610 is configured to determine a target frequency point or cell from multiple frequency points or cells.

The communication unit 1620 is configured to send a reference signal or system information on the target frequency point or cell.

Optionally, the multiple frequency points or cells belong to an unlicensed frequency band.

Optionally, the processing unit 1610 is further configured to perform sequentially, by the network device, a Listen Before Talk (LBT) operation on the multiple frequency points; and take a frequency point with a successful LBT operation as the target frequency point.

Optionally, the communication unit 1620 is further configured to send a notification message to a terminal device, wherein the notification message is used for indicating the target frequency point or cell for receiving the reference signal or system information.

It should be understood that the network device 1600 may implement the corresponding operations implemented by the network device in the above methods, which will not be repeated here for brevity.

FIG. 17 is a schematic block diagram of a terminal device 1700 according to an embodiment of the present application. The terminal device 1700 includes a processing unit 1710 and/or a communication unit 1720.

The processing unit 1710 is configured to determine a frequency point, on which a Radio Link Monitoring (RLM) operation is performed, from multiple frequency points.

The processing unit 1710 is further configured to perform the RLM operation on the determined frequency point, wherein RLM operations on the multiple frequency points adopt a same out-of-sync counter and/or a same in-sync counter, or, the communication unit 1720 is configured to receive system information on the determined frequency point.

Optionally, the multiple frequency points or cells belong to an unlicensed frequency band.

Optionally, the communication unit 1720 is further configured to receive a notification message sent by a network device, wherein the notification message is used for indicating a frequency point on which a reference signal is sent.

The processing unit 1710 is further configured to determine a frequency point indicated by the notification message as the frequency point on which the RLM operation is performed.

Optionally, the processing unit 1710 is further configured to perform the RLM operation within a time window.

Optionally, the processing unit 1710 is further configured to increase the out-of-sync counter by one if the reference signal is not received at an end of the time window.

It should be understood that the terminal device 1700 may implement the corresponding operations implemented by the terminal device in the above methods, which will not be repeated here for brevity.

FIG. 18 is a schematic block diagram of a terminal device 1800 according to an embodiment of the present application. The terminal device 1800 includes a processing unit 1810 configured to determine a time window; and perform a Radio Link Monitoring (RLM) operation on an unlicensed frequency band within the time window.

Optionally, the processing unit 1810 is further configured to increase an out-of-sync counter by one if the reference signal is not received on the unlicensed frequency band at an end of the time window.

It should be understood that the terminal device 1800 may implement the corresponding operations implemented by the terminal device in the above methods, which will not be repeated here for brevity.

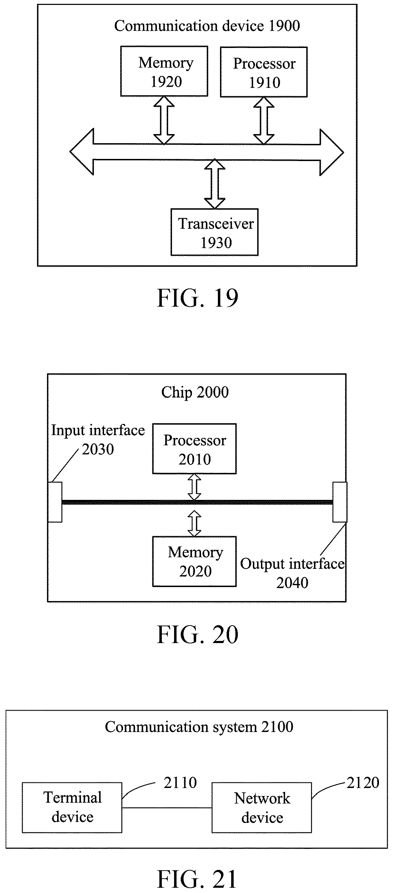

FIG. 19 is a schematic diagram of structure of a communication device 1900 provided by an embodiment of the present application. The communication device 1900 shown in FIG. 19 includes a processor 1910, which may call and run a computer program from a memory to implement the methods in the embodiments of the present application.

Optionally, as shown in FIG. 19, the communication device 600 may further include a memory 1920. The processor 1910 may call and run a computer program from the memory 1920 to implement the methods in the embodiments of the present application.

The memory 1920 may be a separate device independent of the processor 1910 or may be integrated in the processor 1910.

Optionally, as shown in FIG. 19, the communication device 1900 may further include a transceiver 1930, and the processor 1910 may control the transceiver 1930 to communicate with other devices. Specifically, the transceiver 1930 may send information or data to other devices or receive information or data sent by other devices.

The transceiver 1930 may include a transmitter and a receiver. The transceiver 1930 may further include antennas, and the number of antennas may be one or more.

Optionally, the communication device 1900 may be a network device of the embodiment of the present application, and the communication device 1900 may implement the corresponding processes implemented by the network device in various methods of the embodiments of the present application, which will not be repeated here for brevity.

Optionally, the communication device 1900 may be specifically a mobile terminal/terminal device of the embodiment of the present application, and the communication device 1900 may implement the corresponding processes implemented by the mobile terminal/terminal device in the various methods of the embodiments of the present application, which will not be repeated here for brevity.

FIG. 20 is a schematic diagram of structure of a chip according to an embodiment of the present application. A chip 2000 shown in FIG. 20 includes a processor 2010. The processor 2010 may call and run a computer program from a memory to implement the methods in the embodiments of the present application.

Optionally, as shown in FIG. 20, the chip 2000 may further include a memory 2020. The processor 2010 may call and run a computer program from the memory 2020 to implement the methods in the embodiments of the present application.

The memory 2020 may be a separate device independent of the processor 2010 or may be integrated in the processor 710.

Optionally, the chip 2000 may further include an input interface 2030. The processor 2010 may control the input interface 2030 to communicate with other devices or chips. Specifically, the processor 2010 may acquire information or data sent by other devices or chips.

Optionally, the chip 2000 may further include an output interface 2040. The processor 2010 may control the output interface 2040 to communicate with other devices or chips. Specifically, the processor 2010 may output information or data to other devices or chips.

Optionally, the chip may be applied in the network device of the embodiment of the present application, and the chip may implement the corresponding processes implemented by the network device in various methods of the embodiments of the present application, which will not be repeated here for brevity.

Optionally, the chip may be applied in a mobile terminal/terminal device of the embodiment of the present application, and the chip may implement the corresponding processes implemented by the mobile terminal/terminal device in the various methods of the embodiments of the present application, which will not be repeated here for brevity.

It should be understood that the chip mentioned in the embodiment of the present application may be referred to as a system-level chip, a system chip, a chip system or a system-on-chip, etc.

FIG. 21 is a schematic block diagram of a communication system 2100 provided by an embodiment of the present application. As shown in FIG. 9, the communication system 2100 may include a terminal device 2110 and a network device 2120.

Herein, the terminal device 910 may be configured to implement the corresponding functions implemented by the terminal device in the above-mentioned method, and the network device 2120 may be configured to implement the corresponding functions implemented by the network device in the above-mentioned method, which will not be repeated here for brevity.

It should be understood that, the processor in the embodiment of the present application may be an integrated circuit chip having a signal processing capability. In an implementation process, the acts of the foregoing method embodiments may be implemented by using an integrated logic circuit of hardware in the processor or instructions in a form of software. The processor may be a general purpose processor, a digital signal processor (Digital Signal Processing, DSP), an application specific integrated circuit (Application Specific Integrated Circuit, ASIC), a field programmable gate array (Field Programmable Gate Array, FPGA) or another programmable logic device, a discrete gate or a transistor logic device, or a discrete hardware component. The processor may implement or execute various methods, acts and logic block diagrams disclosed in embodiments of the present application. The general purpose processor may be a microprocessor, or the processor may alternatively be any conventional processor, or the like. The acts of the method disclosed in connection with the embodiments of the present application may be directly embodied by the execution of the hardware decoding processor, or by the execution of a combination of hardware and software modules in the decoding processor. The software module may be located in a mature storage medium in the field, such as a random access memory, a flash memory, a read-only memory, a programmable read-only memory, an electrically erasable programmable memory, or a register. The storage medium is located in the memory, and the processor reads information in the memory and completes the steps of the foregoing methods in combination with hardware of the processor.

It should be understood that the storage in embodiments of the present application may be a transitory memory or non-transitory memory, or may include both transitory and non-transitory memory. The non-transitory memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The transitory memory may be a random access memory (Random Access Memory, RAM), and is used as an external cache. Through exemplary but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM), and a direct rambus dynamic random access memory (Direct Rambus RAM, DR RAM). It should be noted that the memory in the systems and methods described in this specification is aimed at including but being not limited to these and any memory of another proper type.

It should be understood that, the foregoing memory is an example for illustration and should not be construed as limiting. For example, optionally, the memory in the embodiments of the present application may be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), a Direct Rambus RAM (DR RAM), or the like. That is, memories in the embodiments of the present application are intended to include, but are not limited to, these and any other suitable types of memories.

An embodiment of the present application further provides a computer readable storage medium configured to store a computer program.

Optionally, the computer readable storage medium may be applied in a network device of the embodiment of the present application, and the computer program enables the computer to perform the corresponding processes implemented by the network device in various methods of the embodiments of the present application, which will not be repeated here for brevity.

Optionally, the computer readable storage medium may be applied in a mobile terminal/terminal device of the embodiment of the present application, and the computer program enables the computer to perform the corresponding processes implemented by the mobile terminal/terminal device in various methods of the embodiments of the present application, which will not be repeated here for brevity.

An embodiment of the present application also provides a computer program product including computer program instructions.

Optionally, the computer program product may be applied in a network device of the embodiment of the present application, and the computer program instructions enable the computer to perform the corresponding processes implemented by the network device in various methods of the embodiments of the present application, which will not be repeated here for brevity.

Optionally, the computer program product may be applied in a mobile terminal/terminal device of the embodiment of the present application, and the computer program instructions enable the computer to perform the corresponding processes implemented by the mobile terminal/terminal device in various methods according to the embodiments of the present application, which will not be repeated here for brevity.

An embodiment of the present application also provides a computer program.

Optionally, the computer program may be applied in a network device of the embodiment of the present application. When the computer program is run on the computer, the computer is enabled to perform the corresponding processes implemented by the network device in various methods of the embodiment of the present application, which will not be repeated here for brevity.

Optionally, the computer program may be applied in a mobile terminal/terminal device of the embodiment of the present application. When the computer program is run on the computer, the computer is enabled to perform the corresponding processes implemented by the mobile terminal/terminal device in various methods of the embodiment of the present application, which will not be repeated here for brevity.

Those of ordinary skill in the art will recognize that the exemplary elements and algorithm acts described in combination with the embodiments disclosed herein may be implemented in electronic hardware, or a combination of computer software and electronic hardware. Whether the functions are implemented by using hardware or software depends on a particular application and a design constraint condition of the technical solution. Skilled artisans may use different methods to implement the described functions in respect to each particular application, but such implementation should not be considered to be beyond the scope of the present invention.

A person skilled in the art may clearly understand that, for the purpose of convenient and brief description, for a detailed working process of the foregoing system, apparatus, and unit, refer to a corresponding process in the foregoing method embodiments, and details are not described herein again.

In several embodiments provided in the present application, it should be understood that the disclosed systems, apparatuses, and methods may be implemented in other ways. The apparatus embodiments are only illustrative, for example, division of the units is only a logical function division, and there may be other division manners in actual realization. For example, multiple units or components may be combined or integrated to another system, or some features may be ignored or not executed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on multiple network units. Some or all of the units may be selected based on actual requirements to achieve the objectives of the solutions of the embodiments.

In addition, various functional units in various embodiments of the present application may be integrated in one processing unit, or various units may be physically present separately, or two or more units may be integrated in one unit.

When the functions are implemented in the form of a software functional unit and sold or used as an independent product, the functions may be stored in a computer-readable storage medium. Based on this understanding, the technical solution of the present application, in essence, or the part contributing to the prior art, or the part of the technical solution, may be embodied in the form of a software product stored in a storage medium, including a variety of instructions for causing a computer device (which may be a personal computer, a server, or a network device) to perform all or part of the acts of the method described in various embodiments of the present application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The above embodiments are only exemplary implementations of the present application, but the scope of the present application is not limited thereto. Within the technical scope of the present application, any person skilled in the art may easily conceive changes or substitutions which should be covered in the protection scope of the present application. Therefore, the protection scope of the present application shall be the protection scope defined by the claims.

## Claims

1. A wireless communication method, comprising:
performing, by a first network device, a first Listen Before Talk (LBT) operation on an unlicensed frequency band to send a reference signal;
sending, by the first network device, indication information when the first LBT operation fails, wherein the indication information is used for indicating that the first network device does not send the reference signal through the unlicensed frequency band.

2. The method according to claim 1, wherein sending, by the first network device, the indication information comprises:
performing, by the first network device, a second LBT operation on the unlicensed frequency band; and
sending, by a second network device, the indication information to a terminal device through the unlicensed frequency band when the second LBT operation succeeds.

3. The method according to claim 1, wherein sending, by the first network device, the indication information comprises:
sending, by the first network device, the indication information to a terminal device through a licensed frequency band.

4. The method according to claim 1, wherein sending, by the first network device, the indication information comprises:
sending, by the first network device, the indication information to a second network device, where the indication information is used for the second network device to indicate to a terminal device through a licensed frequency band that the first network device does not send the reference signal through the unlicensed frequency band.

5. The method according to claim 4, wherein the first network device and the second network device adopt different Radio Access Technologies (RATs); and the indication information is information encoded with Abstract Syntax Notation One (ASN.1) by the first network device.

6. The method according to claim 4 or 5, further comprising:
sending, by the first network device, to the second network device at least one piece of the following information:
timing information of the reference signal at a first network device side;
a time-frequency resource position for sending the reference signal;
a time window for sending the reference signal;
a period for sending the reference signal; and
a type of the reference signal.

7. The method according to any one of claims 1 to 6, further comprising:
sending, by the first network device, statistical information to a second network device, wherein the statistical information is used for indicating a number of times the reference signal is not successfully sent on the unlicensed frequency band.

8. The method according to any one of claims 4 to 7, further comprising:
receiving, by the first network device, a notification message sent by the second network device, wherein the notification message is used for notifying that a network device serving the terminal device is modified from the first network device to another network device, or for notifying that a Primary Cell (PCell) or Primary Secondary Cell (PSCell) of the first network device is modified.

9. The method according to any one of claims 4 to 8, wherein the first network device is a Secondary Node (SN), and the second network device is a Master Node (MN).

10. The method according to any one of claims 1 to 9, wherein performing, by the first network device, the first LBT operation on the unlicensed frequency band comprises:
performing, by the first network device, the first LBT operation on a plurality of frequency points of the unlicensed frequency band;
wherein failure of the first LBT operation means that no available resource is monitored on the plurality of frequency points.

11. The method according to any one of claims 1 to 10, wherein performing, by the first network device, the first LBT operation on the unlicensed frequency band comprises:
performing, by the first network device, the first LBT operation on the unlicensed frequency band within a time window;
wherein failure of the first LBT operation means that no available resource is monitored within the time window.

12. The method according to any one of claims 1 to 11, wherein the indication information is carried in Radio Resource Control (RRC) signaling, physical layer signaling, or Media Access Control (MAC) layer signaling.

13. The method according to any one of claims 1 to 3, wherein the method is applied in a StandAlone (SA) network scenario.

14. The method according to any one of claims 1 to 12, wherein the method is applied in a Non-StandAlone (NSA) network scenario or a Dual Connectivity (DC) network scenario.

15. A wireless communication method, comprising:
receiving, by a second network device, first indication information sent by a first network device, wherein the first indication information is used for indicating that the first network device does not send a reference signal through an unlicensed frequency band; and
sending, by the second network device, second indication information to a terminal device through a licensed frequency band, wherein the second indication information is used for indicating that the first network device does not send the reference signal through the unlicensed frequency band.

16. The method according to claim 15, wherein the first network device and the second network device adopt different Radio Access Technologies (RATs); and the second indication information comprises information encoded with Abstract Syntax Notation One (ASN.1) by the first network device in the first indication information; and
the second indication information comprises the first indication information.

17. The method according to claim 15 or 16, further comprising:
receiving, by the second network device, at least one piece of the following information sent by the first network device:
timing information of the reference signal at a first network device side;
a time-frequency resource position for sending the reference signal;
a period for sending the reference signal;
a time window for sending the reference signal; and
a type of the reference signal;
wherein sending, by the second network device, the second indication information to the terminal device through the licensed frequency band comprises:
sending, by the second network device, based on the at least one piece of the information, the second indication information to the terminal device through the licensed frequency band.

18. The method according to any one of claims 15 to 17, further comprising:
determining, by the second network device, a number of times the reference signal is not successfully sent by the first network device through the unlicensed frequency band;
modifying, by the second network device, based on statistical information, a network device serving the terminal device from the first network device to another network device, or a Primary Cell (PCell) or Primary Secondary Cell (PSCell) of the first network device.

19. The method according to claim 18, wherein determining, by the second network device, the number of times the reference signal is not successfully sent by the first network device through the unlicensed frequency band comprises:
receiving, by the second network device, statistical information sent by the first network device, wherein the statistical information is used for indicating the number of times the reference signal is not successfully sent by the first network device through the unlicensed frequency band;
determining, by the second network device, based on the statistical information, the number of times the reference signal is not successfully sent by the first network device through the unlicensed frequency band.

20. The method according to claim 18, wherein obtaining the number of times the reference signal is not successfully sent by the first network device through the unlicensed frequency band comprises:
determining, by the second network device, the number of times the reference signal is not successfully sent by the first network device through the unlicensed frequency band, according to a number of times the first network device sends the first indication information to the second network device.

21. The method according to any one of claims 15 to 20, wherein the first network device is a Secondary Node (SN), and the second network device is a Master Node (MN).

22. The method according to any one of claims 15 to 21, wherein the method is applied in a Non-StandAlone (NSA) network scenario or a Dual Connectivity (DC) network scenario.

23. A wireless communication method, comprising:
receiving, by a second network device, statistical information sent by a first network device, wherein the statistical information is used for indicating a number of times the reference signal is not successfully sent by the first network device through an unlicensed frequency band; and
modifying, based on the statistical times, a network device serving a terminal device from the first network device to another network device, or a Primary Cell (PCell) or Primary Secondary Cell (PSCell) of the first network device.

24. The method according to claim 23, wherein the method is applied in a Non-StandAlone (NSA) network scenario or a Dual Connectivity (DC) network scenario.

25. A wireless communication method, comprising:
receiving, by a terminal device, indication information, wherein the indication information is used for indicating that a first network device does not send a reference signal on an unlicensed frequency band; and
performing, by the terminal device, a Radio Link Monitoring (RLM) operation based on the indication information.

26. The method according to claim 25, wherein performing, by the terminal device, the RLM operation based on the indication information comprises:
adjusting, by the terminal device, based on the indication information, an out-of-sync counter and/or an in-sync counter corresponding to the RLM operation.

27. The method according to claim 25, wherein receiving, by the terminal device, the indication information comprises:
receiving, by the terminal device, through an unlicensed frequency band, the indication information sent by the first network device; or,
receiving, by the terminal, through a licensed frequency band, the indication information sent by a second network device.

28. The method according to claim 27, wherein the first network device is a Secondary Node (SN), and the second network device is a Master Node (MN).

29. A wireless communication method, comprising:
determining, by a network device, a target frequency point or cell from a plurality of frequency points or cells; and
sending a reference signal or system information in the target frequency point or cell.

30. The method according to claim 29, wherein the plurality of frequency points or cells belong to an unlicensed frequency band.

31. The method according to claim 29 or 30, wherein determining, by the network device, the target frequency point or cell from the plurality of frequency points or cells comprises:
performing sequentially, by the network device, a Listen Before Talk (LBT) operation on the plurality of frequency points; and
taking a frequency point with a successful LBT operation as the target frequency point.

32. The method according to any one of claims 29 to 31, further comprising:
sending, by the network device, a notification message to a terminal device, wherein the notification message is used for indicating the target frequency point or cell for receiving the reference signal or system information.

33. A wireless communication method, comprising:
determining, by a terminal device, a frequency point on which a Radio Link Monitoring (RLM) operation is performed from a plurality of frequency points;
performing, by the terminal device, the RLM operation on the determined frequency point, wherein RLM operations on the plurality of frequency points adopt a same out-of-sync counter and/or a same in-sync counter, or,
receiving, by the terminal device, system information on the determined frequency point.

34. The method according to claim 33, wherein the plurality of frequency points or cells belong to an unlicensed frequency band.

35. The method according to claim 33 or 34, further comprising:
receiving, by the terminal device, a notification message sent by a network device, wherein the notification message is used for indicating a frequency point for sending a reference signal;
determining, by the terminal device, the frequency point on which the RLM operation is performed from the plurality of frequency points comprises:
determining, by the terminal device, the frequency point indicated by the notification message as the frequency point on which the RLM operation is performed.

36. The method according to any one of claims 33 to 35, wherein performing, by the terminal device, the RLM operation on the determined frequency point comprises:
performing, by the terminal device, the RLM operation within a time window.

37. The method according to claim 36, wherein performing, by the terminal device, the RLM operation within the time window comprises:
increasing, by the terminal device, an out-of-sync counter by one if the reference signal is not received at an end of the time window.

38. A wireless communication method, comprising:
determining, by a terminal device, a time window; and
performing, by the terminal device, a Radio Link Monitoring (RLM) operation on an unlicensed frequency band within the time window.

39. The method according to claim 38, wherein performing, by the terminal device, the RLM operation on the unlicensed frequency band within the time window comprises:
increasing, by the terminal device, an out-of-sync counter by one if a reference signal is not received on the unlicensed frequency band at an end of the time window.

40. A network device, comprising: a processing unit and a communication unit; wherein
the processing unit is configured to perform a first Listen Before Talk (LBT) operation on an unlicensed frequency band to send a reference signal; and
the communication unit is configured to send indication information when the first LBT operation fails, wherein the indication information is used for indicating that the network device does not send the reference signal through the unlicensed frequency band.

41. A network device, comprising a receiving unit and a sending unit; wherein,
the receiving unit is configured to receive first indication information sent by a first network device, wherein the first indication information is used for indicating that the first network device does not send a reference signal through an unlicensed frequency band; and
the sending unit is configured to send second indication information to a terminal device through a licensed frequency band, wherein the second indication information is used for indicating that the first network device does not send the reference signal through the unlicensed frequency band.

42. A network device, comprising a communication unit and a processing unit; wherein:
the communication unit is configured to receive statistical information sent by a first network device, wherein the statistical information is used for indicating a number of times a reference signal is not successfully sent by the first network device through a unlicensed frequency band; and
the processing unit is configured to, based on the statistical times, modify a network device serving a terminal device from the first network device to another network device, or modify a Primary Cell (PCell) or Primary Secondary Cell (PSCell) of the first network device.

43. A terminal device, comprising a communication unit and a processing unit; wherein:
the communication unit is configured to receive indication information, wherein the indication information is used for indicating that a first network device does not send a reference signal on an unlicensed frequency band; and
the processing unit is configured to perform a Radio Link Monitoring (RLM) operation based on the indication information.

44. A network device, comprising: a processing unit and a communication unit; wherein the processing unit is configured to determine a target frequency point or cell from a plurality of frequency points or cells; and
the communication unit is configured to send a reference signal or system information in the target frequency point or cell.

45. A terminal device, comprising a processing unit and a communication unit; wherein,
the processing unit is configured to determine a frequency point, on which a Radio Link Monitoring (RLM) operation is performed, from a plurality of frequency points; and
the processing unit is further configured to perform the RLM operation on the determined frequency point, wherein RLM operations on the plurality of frequency points adopt a same out-of-sync counter and/or a same in-sync counter, or, the communication unit is configured to receive system information on the determined frequency point.

46. A wireless communication device, comprising a processing unit configured to, determine a time window; and
perform a Radio Link Monitoring (RLM) operation on an unlicensed frequency band within the time window.

47. A terminal device, comprising a processor and a memory, wherein the memory is configured to store a computer program, and the processor is configured to call and run the computer program stored in the memory to perform the method according to any one of claims 25 to 28 and 33 to 39.

48. A network device, comprising a processor and a memory, wherein the memory is configured to store a computer program, and the processor is configured to call and run the computer program stored in the memory to perform the method according to any one of claims 1 to 24 and 29 to 32.

49. A chip, comprising a processor configured to call and run a computer program from a memory, enabling a device on which the chip is mounted to perform the method according to any one of claims 1 to 24 and 29 to 32.

50. A chip, comprising a processor configured to call and run a computer program from a memory, enabling a device on which the chip is mounted to perform the method according to any one of claims 25 to 28 and 33 to 39.

51. A computer-readable storage medium storing a computer program, wherein the computer program enables a computer to perform the method according to any one of claims 1 to 24 and 29 to 32.

52. A computer-readable storage medium storing a computer program, wherein the computer program enables a computer to perform the method according to any one of claims 25 to 28 and 33 to 39.

53. A computer program product comprising computer program instructions that enable a computer to perform the method according to any one of claims 1 to 24 and 29 to 32.

54. A computer program product comprising computer program instructions that enable a computer to perform the method according to any one of claims 25 to 28 and 33 to 39.

55. A computer program enabling a computer to perform the method according to any one of claims 1 to 24 and 29 to 32.

56. A computer program enabling a computer to perform the method according to any one of claims 25 to 28 and 33 to 39.
